# NEUE EUROPÄISCHE PATENTSCHRIFT

(11) **EP 1 727 661 B2**
(45) Veröffentlichungstag und Bekanntmachung des Hinweises auf die Entscheidung über den Einspruch: **08.05.2013**
(45) Hinweis auf die Patenterteilung: 09.09.2009
(21) Anmeldenummer: 05707725.7
(22) Anmeldetag: 08.03.2005
(51) Int. Cl.: B29C 49/78, B29C 49/18, B29C 49/66

(54) **VERFAHREN UND VORRICHTUNG ZUM HERSTELLEN EINES HOHLKÖRPERS UNTER VERRINGERUNG DES LUFTVERBRAUCHS**
METHOD AND DEVICE FOR PRODUCING A HOLLOW BODY WHILE REDUCING AIR CONSUMPTION
PROCEDE ET DISPOSITIF POUR PRODUIRE UN CORPS CREUX EN REDUISANT LA CONSOMMATION D' AIR

(30) Priorität: 25.03.2004 DE 102004014653
(43) Veröffentlichungstag der Anmeldung: 06.12.2006
(73) Patentinhaber: Krones Aktiengesellschaft, 93073 Neutraubling (DE)
(72) Erfinder: HIRDINA, Jochen, 93057 Regensburg (DE)
(74) Vertreter: Grünecker, Kinkeldey, Stockmair & Schwanhäusser
(86) Internationale Anmeldenummer: PCT/EP2005/002399
(87) Internationale Veröffentlichungsnummer: WO 2005/092594

(56) Entgegenhaltungen:
- EP-A- 0 655 313
- EP-A- 0 754 537
- EP-A2- 0 406 149
- WO-A1-03/009993
- DE-A1- 19 934 320
- FR-A- 2 827 541
- JP-A- 11 207 808
- US-A- 4 488 863
- US-A- 5 622 735
- US-A1- 2002 171 161

## Beschreibung

Die Erfindung betrifft ein Verfahren zum Herstellen eines Hohlkörpers, insbesondere eines wärmebeständigen Hohlkörpers, der aus einem erwärmten Vorformling aus thermoplastischem Kunststoff in einer konturierten Blasform ausgeformt wird. Die Erfindung betrifft weiterhin eine Vorrichtung, mit der ein solches Verfahren durchgeführt werden kann.

In der Lebensmittelindustrie und insbesondere auch in der Getränkeindustrie geht man seit einiger Zeit immer mehr dazu über, die Lebensmittel bzw. Getränke in Hohlkörpern aus thermoplastischem Kunststoff, insbesondere Flaschen aus PET abzufüllen. Um die Haltbarkeit von Getränken zu verlängern, gibt es verschiedene Möglichkeiten wie zum Beispiel das Heißabfüllen. Will man heiß abzufüllende Getränke in Kunststoffbehältern, wie beispielsweise PET-Flaschen, abfüllen, so braucht man eine erhöhte Temperaturbeständigkeit dieser Behälter.

Bei bekannten Verfahren und Vorrichtungen zum Herstellen von wärmebeständigen Hohlkörpern werden die Vorformlinge mit einem unter Druck stehenden Medium vorgeblasen (Vorblasphase) und in einem zweiten Schritt mit einem unter höherem Druck stehenden Medium fertig geblasen (Fertigblasphase). Der Fertigblasdruck ist so hoch, dass der Kunststoffrohling an die Wandung der Blasform gedrückt wird. Dieser Druck wird eine gewisse Zeit gehalten, um die Konturen der Form ideal auf die entstehende Flasche zu übertragen. Handelt es sich bei den herzustellenden Hohlkörpern um temperaturbeständige Hohlkörper (so genannte hot fill - Flaschen), so wird die Formwand, an die die entstehende Flasche zum Ausprägen der Kontur gedrückt wird, erwärmt. Das Halten der Flasche an dieser warmen Wandung hat den Grund, den Kunststoff einer teilweisen Kristallisation zu unterziehen, um dadurch eine erhöhte Thermo- und Formstabilität zu erreichen. Bei zu starker Kristallisation des Kunststoffes tritt aber eine unerwünschte Verfärbung desselben, die sogenannte Opalisierung, ein. Um eine ausreichende Formstabilität der Flaschen beim Entnehmen aus der Form zu realisieren und um die oben genannte Verfärbung zu verhindern, ist es beim Herstellungsprozess von heißbefüllbaren Kunststoffflaschen sehr wichtig, diese zu kühlen.. Die Kühlung kann zum Beispiel im Inneren der Flasche erfolgen. Dazu können verschiedene Medien verwendet werden. Weit verbreitet ist die Kühlung durch Druckluft. Die Kühl- beziehungsweise Spülluft wird der Flasche oftmals durch eine hohle Reckstange zugeführt. Um eine ausreichende Kühlung durch Luftzirkulation zu gewährleisten, werden beispielsweise Ventile geöffnet, um einen Luftfluss zu erzeugen, der die Wärme von der Flascheninnenwand abtransportiert. Dabei strömt sogenannte Spülluft meist von der Luftzuführung über die Flasche und den Schalldämpfer ins Freie. Nach dieser Kühlphase wird das restliche sich in der Flasche befindliche und noch unter einem Restdruck stehende Medium abgelassen. Meist geschieht dies auch über den Schalldämpfer.
Ein Nachteil dieses Verfahrens ist der sehr hohe Luftverbrauch, der insbesondere durch den Kühlbeziehungsweise Spülvorgang hervorgerufen wird.

Der nächstliegende Stand der Technik ist US5622735 und offenbart ein Verfahren und eine Vorrichtung zum Herstellen eines Hohlkörpers, der aus einem erwärmten Vorformling aus thermoplastischem Kunststoff in einer konturierten Blasform ausgeformt wird und die folgenden Schritte bzw. Einrichtungen zur Durchführung der Schritte aufweist:
i. Vorblasen des Vorformlings durch Recken und Einleiten eines ersten Mediums in den Vorformling, das in einem ersten Medienspeicher gespeichert und unter einem Druck p1 steht;
ii. Weiterblasen des Vorformlings durch Einleiten eines zweiten Mediums in den Vorformling, das in einem zweiten Medienspeicher gespeichert und dessen Druck p2 höher als P1 ist;
iii. Kühlen des Hohlkörpers von innen durch das Einlassen eines dritten Mediums, und dessen Druck p3 höher als p2 ist und durch die Druckdifferenz resultierendes vollständiges Ausprägen des Hohlkörpers; und v. Ablassen des Mediums aus dem Hohlkörper (7), so dass im Hohlkörper (7) im Wesentlichen Umgebungsdruck vorherrscht.
Desweitern offenbart US5622735 auch eine Vorrichtung entsprechend dem Oberbegriffs des Vorrichtungsanspruchs 9.

Die FR2827541 zeigt ein Verfahren und eine Blasvorrichtung bei der ein Hohlkörper mittels eines Vorblas- und eines Fertigblasschrittes aus einem Vorformling hergestellt wird, wobei nach der Fertigstellung die sich im Hohlkörper befindliche Blasluft aufgefangen und für verschiedenste Anwendungen wieder verwendet wird.

Die DE 19934320 zeigt ein Verfahren und eine Vorrichtung zur Erzeugung von wärmebeständigen Hohlkörpern, die durch Streckblasen hergestellt werden, wobei sich das Verfahren dadurch auszeichnet, dass die Blasluft teilweise erwärmt ist und Temperaturen über der Temperatur der Blasform aufweist.

Der Erfindung liegt deshalb die Aufgabe zugrunde, einen Prozess zur Herstellung von Hohlkörpern, insbesondere wärmebeständigen Hohlkörpern zur Verfügung zu stellen, dessen Luftverbrauch erheblich geringer ist, als der der bekannten Prozesse. Außerdem liegt der Erfindung die Aufgabe zugrunde, eine Vorrichtung zur Verfügung zu stellen, die nach dem erfindungsgemäßen Prozess arbeitet.

Zur Lösung der Aufgabe hinsichtlich des Verfahrens werden die im Anspruch 1 angegebenen Verfahrensschritte vorgesehen. Gemäß diesen Verfahrensschritten wird zunächst ein Medium, dabei handelt es sich vorzugsweise um Druckluft, in den sich in der Blasform befindlichen Vorformling eingeleitet, das in einem ersten Medienspeicher unter einem Druck p1 gespeichert ist und den Vorformling verformt (Vorblasphase). Neben Druckluft können natürlich auch andere Medien verwendet werden. Dabei sind sowohl andere Aggregatszustände denkbar, wie etwa Dampfförmige oder Flüssige Medien, als auch andere Zusammensetzungen. Neben Luft können beispielsweise auch verschiedenste Gase, wie zum Beispiel Stickstoff oder Sauerstoff oder die verschiedensten Mischungen aus solchen, verwendet werden. Als dampfförmiges Medium kann beispielsweise Wasserdampf verwendet werden. Es ist aber auch denkbar, den Formprozess mit den verschiedensten flüssigen Medien wie zum Beispiel Wasser durchzuführen.
Das Verfahren beschränkt sich nicht auf die Verwendung bestimmter Kunststoff-Preforms, weshalb zum Beispiel PET-Vorformling, PVC-Vorformlinge oder andere verwendet werden können.

Der mindestens eine Medienspeicher kann auf verschiedenste Arten ausgebildet sein. Es sind zum Beispiel kugelförmige, quaderförmige oder ringförmige Speicher denkbar. Auch andere, hier nicht genannte Speicherformen sind möglich und werden ausdrücklich nicht ausgeschlossen.

Das Vorblasmedium steht unter einem Druck p1 von 2 bis 20 bar, wobei es in einer bevorzugten Ausführungsform unter einem Druck von 3 bis 10 bar steht.
In dieser Phase des Blasprozesses beginnt auch das Recken des vorformlings indem sich eine Reckstange von der Öffnung desselben in Richtung dessen Boden bewegt, um ihn der Länge nach zu dehnen. Die Reckstange kann sowohl massiv als auch mit Aussparungen versehen oder sogar ganz hohl ausgeformt sein, um den verschiedenen Anforderungen des Blasprozesses gerecht zu werden.
Nachdem der Hohlkörper vorgeblasen wurde, wird nochmals ein Medium mit einem Druck p2 eingeleitet, wobei p2 höher ist als p1. Dadurch wird der Hohlkörper fertig geblasen und an die Blasforminnenwand gedrückt (Fertigblasphase). Beim Fertigblasmedium kann es sich wiederum um verschiedenste Medien mit unterschiedlichen Aggregatzuständen handeln. Vorzugsweise handelt es sich beim Fertigblasen um das gleiche Medium wie beim Vorblasen, in einer bevorzugten Ausführungsform ist dies Druckluft. Das Fertigblasmedium steht unter einem Druck p2 von 15 bis 45 bar, vorzugsweise unter einem Druck von 20 bis 30 bar. In einer besonders bevorzugten Weiterbildung wird ein unter 23 bis 26 bar stehendes Fertigblasmedium verwendet.

Die Blasforminnenwand ist bei der Herstellung von wärmebeständigen Hohlkörpern zu erwärmen, um eine Teilkristallisation und damit eine Stabilisierung der herzustellenden Behältnisse zu erreichen. Um den Hohlkörper, der durch den Schritt des Fertigblasens an der warmen Blasforminnenwand anliegt, zu kühlen und dadurch den unerwünschten Effekt des Rückschrumpfens bei der Entnahme zu vermeiden, wird in einem weiteren Schritt ein Spül- bzw. Kühlmedium mit einem Druck p3 aus einem Speicher in den Hohlkörper eingeleitet. Die Einleitung des Kühlmediums kann entweder über die Blasdüse, die am oberen Ende des herzustellenden Behälters sitzt, erfolgen oder über eine hohle Reckstange eingebracht werden. Die hohle Reckstange kann auch unten offen sein, und hat dann den Vorteil, dass ganz gezielt der Boden des Behälters gekühlt werden kann. Dies ist besonders deshalb wichtig, weil - aufgrund des Blasprozesses - im Bodenbereich mehr Material vorhanden ist als beispielsweise im Hals- bzw. Körperbereich. Mehr Material bedeutet aber auch mehr gespeicherte Wärme, die abtransportiert werden muss, um beim Entformen des Hohlkörpers Formstabilität zu gewährleisten. Wird die Kühlluft über die hohle Reckstange in den Hohlkörper eingeleitet, so befinden sich in einer bevorzugten Ausführungsform zusätzlich zu der nach unten gerichteten Öffnung seitlich einige Löcher in der Reckstange, um ganz gezielt bestimmte Bereiche der Behälterinnenwand kühlen zu können. Auch das Kühlmedium kann verschiedenster Zusammensetzung und verschiedensten Zustands sein. In einer bevorzugten Ausführungsform handelt es sich beim Kühlmedium um das gleiche Medium wie beim Vor- und Fertigblasen. Es steht dabei unter einem Druck p3 von 30 bis 45 bar, vorzugsweise 37 bis 45 bar. Der Kühl- bzw. Spülluftmedienspeicher ist vorzugsweise auf die gleiche Art wie die anderen Speicher ausgebildet.

Da der Spülluftdruck p3 größer ist als der Druck der Fertigblasluft p2, hat die Spülluft bei diesem Prozess nicht nur die Aufgabe, die Flasche zu kühlen, sondern auch die Konturen des herzustellenden Hohlkörpers vollständig auszuprägen (Ausprägphase). Dadurch, dass das vollständigen Ausprägen der Kontur des herzustellenden Hohlkörpers nun nicht mehr nur in der Fertigblasphase erledigt wird, kann die Prozesszeit zum Fertigblasen ungefähr um den Anteil, der zum Ausprägen der Kontur vorgesehen wäre, gekürzt werden. An dieser Stelle des Prozesses ist nur eine Verbindung von einem Medienspeicher zum Hohlkörper geöffnet, nämlich die zum Kühlmedienspeicher. Aufgrund des Unterschieds von p2, der zu diesem Zeitpunkt in der Flasche vorherrscht, und p3 kann nach dem Öffnen der Verbindung vom Spül- und Kühlluftmedienspeicher zum Hohlkörper das Kühlmedium in diesen einströmen, allerdings nur so lange, bis der Druck im Hohlkörper gleich dem Druck im Spül- und Kühlluftmedienspeicher ist. Aufgrund dieser beschränkten Einströmung des Kühlmediums in den Hohlkörper ist die Kühlung desselben zu diesem Zeitpunkt des Prozesses noch nicht abgeschlossen. Ist der Druck im Hohlkörper gleich dem Druck im Kühl- und Spülmedienspeicher, so wird dieser Zustand eine gewisse Zeit gehalten, um die angesprochene Ausprägung der Kontur der Flasche und die Kristallisation an der Behälterwand zu unterstützen.

Nach dieser Ausprägphase wird die Kühlung der Flasche dadurch weitergeführt, dass eine Verbindung von der Flasche zu einem Medienspeicher mit geringerem Druck als der der Spülluft hergestellt wird, während die Verbindung von der Flasche zum Spül- und Kühlluftmedienspeicher geöffnet bleibt. Dadurch strömt Spülluft über die Flasche in.den Medienspeicher mit geringerem Druck und die Flasche wird durch die Luftbewegung von innen gekühlt. Die Kühlluft nimmt dabei die Wärme auf und transportiert diese in den Medienspeicher mit geringerem Druck. Im Gegensatz zu den bekannten Prozessen wird also das Spülen der Flasche beim erfindungsgemäßen Prozess nicht gegen die Umgebung sondern gegen einen anderen Medienspeicher durchgeführt. Da in diesem bereits Überdruck vorherrscht, verringert sich im Gegensatz zum Spülen gegen die Umgebung der Spülluftdurchfluss. Dies wird durch eine Verlängerung der Spülzeit ausgeglichen. Dadurch, dass die Prozesszeit beim Fertigblasen verringert wurde, braucht der gesamte Blasprozess trotz Verlängerung der Spülzeit nicht verlängert zu werden.

Der Medienspeicher, gegen den gespült wird, wird also über die Flasche vom Spül- und Kühlluftmedienspeicher gespeist und braucht somit keine eigene Prozessluftversorgung mehr. Dadurch dass die Spülluft beim erfindungsgemäßen Prozess dasjenige Medium mit dem höchsten Druck ist, kann gegen jeden anderen Medienspeicher des Blasprozesses gespült werden. Da jedoch die vorherrschenden Drücke in den jeweiligen Medienspeichern anders sind, müssen aufgrund der unterschiedlichen Druckdifferenzen und der daraus resultierenden unterschiedlichen Druckausgleichszeiten die Spül- beziehungsweise Kühlzeiten angepasst und eingestellt werden.
Am Ende der Kühlphase wird der beschriebene Spülluftdurchfluss wieder gestoppt und die restliche, sich noch in der Flasche befindliche Druckluft abgelassen, sodass in ihr im Wesentlichen Umgebungsbedingungen vorherrschen. Das Ablassen dieser Restluft kann sowohl gegen die Umgebung als auch gegen einen anderen Medienspeicher durchgeführt werden.

Es bestehen gemäß den Unteransprüchen verschiedene Möglichkeiten, das erfindungsgemäße Verfahren weiter auszugestalten.
Vorzugsweise handelt es sich bei mindestens einem Medium um Druckluft. In einer bevorzugten Ausführungsform wird die Art des Mediums bei keinem Prozessschritt verändert. Dadurch ist es möglich, die Medien zwischen den verschiedenen Speichern hin- und her zu transferieren ohne dabei eine unerwünschte Mischung zu erreichen. Lediglich die Drücke müssen auf einem im Wesentlichen konstanten Niveau gehalten werden.

Bei einer dieser vorteilhaften Weiterbildungen werden die Medienspeicher mit Druckausgleichsvorrichtungen wie zum Beispiel Druckausgleichstanks versehen, um den Druck in den Medienspeichern möglichst konstant zu halten. Dies ist besonders zweckmäßig, da Verbindungen zwischen Medienspeichern mit verschiedenen Druckniveaus hergestellt werden, wobei die Soll-Drücke in den Speichern möglichst wenig verändert werden sollen. Es sind verschiedene Druckausgleichsvorrichtungen denkbar, die aber alle so konzipiert sein sollen, dass die Druckänderungen in den Medienspeichern zehn Prozent des Soll-Wertes nicht übersteigen.

Es ist aber auch denkbar, anstelle der Druckausgleichsvorrichtungen der Blasstation Drosselventile vorzuschalten, die den Druck, der in diesem Fall immer etwas höher zugeführt werden muss, als er letztendlich für die jeweiligen Prozessschritte gebraucht wird, reguliert.

Bei einer anderen vorteilhaften Weiterbildung der Erfindung wird das Medium, das sich nach der Kühlphase noch in der Flasche befindet, nicht gegen die Umgebung entlastet, sondern in einen der vorhandenen Medienspeicher übergeben. Dadurch könnte zum Beispiel der Steuerluftmedienspeicher gespeist werden. In einer bevorzugten Weiterbildung handelt es sich bei dem Medienspeicher nicht um einen bereits vorhandenen, sondern um einen weiteren, vierten Medienspeicher, vorzugsweise um einen Niederdruckmedienspeicher. Ein solcher Niederdruckmedienspeicher kann zum Beispiel das Druckluftnetz einer Fabrik sein, über das beispielsweise Druckluftpistolen gespeist werden. Durch eine solche Übergabe wird die Recyclingquote des Blasmediums weiter verbessert.

Hinsichtlich der Vorrichtung wird die der Erfindung zugrunde liegende Aufgabe durch die Merkmale des Anspruchs 9 gelöst.

Danach umfasst die erfindungsgemäße Vorrichtung eine konturierte Blasform, in der sich während des Blasvorgangs der Vorformling bzw. die Flasche befindet, eine Reckstange, mit Hilfe derer der Vorformling entlang seiner Längsachse gereckt wird und mindestens drei Medienspeicher, in denen sich die Prozessmedien des Blasvorgangs befinden. Dabei steht das Vorblasmedium unter einem Druck von 2 bis 20 bar, vorzugsweise 3 bis 10 bar. Das Fertigblasmedium steht unter einem Druck von 15 bis 45 bar, vorzugsweise 23 bis 26 bar und das Spülmedium steht unter einem Druck von 30 bis 45 bar, vorzugsweise 37 bis 40 bar.

Die Unteransprüche zeigen weitere vorteilhafte Weiterbildungen der Vorrichtung. Vorzugsweise handelt es sich bei der Maschine um eine Rotationsstreckblasmaschine. Es ist aber auch denkbar, dieses Verfahren in einer anderen Streckblasmaschine oder einem anderen Maschinentyp, wie zum Beispiel einer Extrusionsblasmaschine, zu verwenden.

In einer bevorzugten Weiterbildung wird als Prozessmedium mindestens in einem Schritt Druckluft verwendet. Vorzugsweise wird Druckluft bei jedem Prozessschritt verwendet. Es ist, wie schon hinsichtlich des Verfahrens erwähnt, aber auch denkbar, beliebige Medien in verschiedenen Aggregatszuständen zu verwenden. In einer bevorzugten Weiterbildung existiert eine zentrale Luftzuführung zur Maschine, die die Prozessluft vom stationären in den drehenden Teil der Maschine übergibt. Die Medienspeicher können in verschiedenster Art und Weise ausgebildet sein. Es sind zum Beispiel kugelförmige oder quaderförmige Medienspeicher denkbar. In einer bevorzugten Ausführungsform handelt es sich bei den Speichern um Kanäle, die im Wesentlichen einen Ring bilden, der aus zwei abgeschlossenen Halbkreisen besteht. Dabei haben die Halbkreise eine Querschnitt, der in etwa einem Rechteck entspricht.

Nach einer anderen bevorzugten Weiterbildung sind an die Ringkanäle Druckausgleichsvorrichtungen angeschlossen, um die Drücke in den Kanälen nahezu konstant zu halten. Konstanter Druck ist für die Qualität der hergestellten Produkte äußerst wichtig.

Nach einer bevorzugten Weiterbildung wird die Spül- bzw. Kühlluft über eine hohle Reckstange in den Hohlkörper eingeführt. Dabei sind in der Reckstange vorzugsweise sowohl am unteren Ende als auch seitlich Löcher angebracht, durch die Kühlluft gezielt an bestimmte Stellen der Flascheninnenwand strömen kann.

Gemäß einer anderen bevorzugten Weiterbildung weist die Maschine sechs Ringkanalspeicher auf, die die Medien zum Vor- und Fertigblasen, zum Kühlen des Hohlkörpers und Steuern der Maschine und zum Steuern der Reckstange (auf und ab) aufnehmen.

Im Nachstehenden wird ein Ausführungsbeispiel der Erfindung anhand der Zeichnungen beschrieben. Es zeigen:
Fig. 1 schematische Draufsicht auf ein Blasrad einer Rotationsstreckblasmaschine,
Fig. 2 schematische Ansicht der Blasstation und der Prozessmedienversorgung,
Fig. 3 Prozesskurve des erfindungsgemäßen Verfahrens zur Herstellung wärmebeständiger Hohlkörper und
Fig. 4 Ventilschaltpunkte beim erfindungsgemäßen Herstellungsprozess.

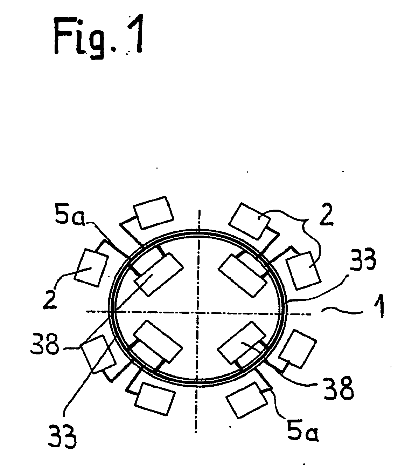

Die Vorrichtung nach Fig. 1 ist zum Herstellen von wärmebeständigen Hohlkörpern 7 aus PET für die Getränkeindustrie in Form von Flaschen konzipiert. Sie umfasst im Wesentlichen eine gewisse Anzahl von Blasstationen 2 in denen die Hohlkörper 7 in eine Blasform 2a eingebettet und mit Überdruck beaufschlagt, und somit zur Flasche geformt werden. Sie umfasst außerdem jeweils eine Hauptblasluftleitung 5a pro Blasstation 2 die an einen Spül- und Kühlluftmedienspeicher 33 angeschlossen ist. Im Inneren des Blasrades befinden sich Druckausgleichstanks 38 deren Aufgabe es ist, die Druckniveaus der Medienspeicher 31-36 möglichst konstant zu halten. Die Medienspeicher 31-36 sind bei der Vorrichtung nach Figur 1 als Ringkanäle ausgebildet.

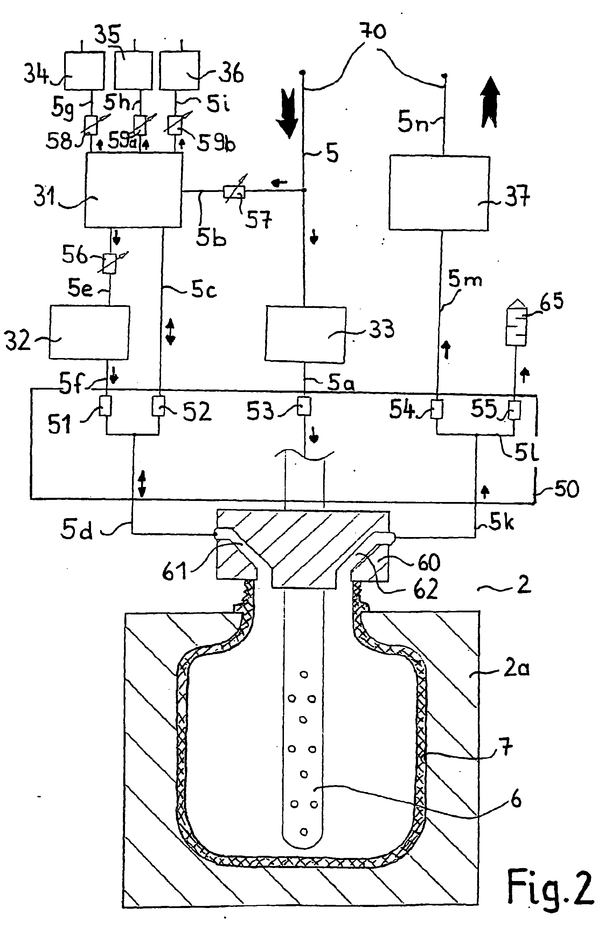

Anhand der Figuren 2-4 lässt sich der Prozessablauf der vorliegenden konkreten Ausführungsform der Erfindung wie folgt beschreiben: Es existiert eine zentrale Prozessmedienversorgung 5, die das unter Anwendungsdruck stehende Prozessmedium vom stationären Teil über den Drehverteiler 70 in den drehenden Teil der Maschine bringt. Hier wird für jeden Teilprozess Druckluft verwendet, die bei der Einbringung in den drehenden Teil der Maschine unter einem Druck von 40 bar steht. Diese Luft wird in den Spül- und Kühlluftmedienspeicher 33 eingeschleust, bis dieser gefüllt ist. Von der zentralen Prozessmedienversorgung 5 existiert eine Verbindung 5b zum Fertigblasmedienspeicher 31, die durch ein automatisches Sperrventil 57 gesteuert wird.
Wenn im Betrieb der Maschine der Druck im Fertigblasmedienspeicher 31 um ca. zehn Prozent seines Sollwertes sinkt, öffnet sich das automatische Sperrventil 57 und der Fertigblasmedienspeicher 31 wird über die Verbindung 5b von der Prozessmedienversorgung 5 so lange gespeist, bis der Druck im Fertigblasmedienspeicher 31 wieder höchstens zehn Prozent unter dem Sollwert liegt. Dieser Fall tritt zum Beispiel beim Anfahren der Maschine ein, wenn noch keine Überdrücke in den Medienspeichern 31-36 aufgebaut sind. Dadurch wird der Fertigblasmedienspeicher 31 schon vor dem fertigenden Betrieb mit Prozessluft versorgt. Über die automatischen Sperrventile 58, 59a, 59b und die Verbindung 5g, 5h und 5i werden durch den Fertigblasmedienspeicher 31 der Steuerluftmedienspeicher 34, der "Recken auf" Medienspeicher 35 und der "Recken ab" Medienspeicher 36 mit Druckluft versorgt. Das automatische Sperrventil 58 ist dabei auf einen Wert von ca. 10 bar eingestellt, um im Steuerluftmedienspeicher diesen Druck einstellen zu können. Der "Recken auf" Medienspeicher 35 und der "Recken ab" Medienspeicher 36 sind mit Prozessluft gefüllt, die unter einem Druck von ca. 6 bar steht. Deshalb brauchen die automatischen Sperrventile 59a und 59b nur auf ca. 6 bar eingestellt werden.
Auch der Vorblasmedienspeicher 32, der die Prozessluft zum Vorblasen liefert, wird über das automatische Sperrventil 56 und die Verbindung 5e gespeist. Da der Vorblasdruck ungefähr 5 bar beträgt, ist auch das automatische Sperrventil 56 ungefähr auf diesen Druck eingestellt.

Fig.2 zeigt außerdem die Blasstation 2. Diese besteht aus dem Ventilblock 50, der Blasdüse 60, der Blasform 2a und der hohlen Reckstange 6. Der Ventilblock 60 seinerseits besteht aus den Ventilen 51-55, die den Zu- beziehungsweise Abfluss der Prozessluft steuern. Die Blasdüse 60 sitzt auf dem Hohlkörper 7 auf und steht mit dem Ventilblock 50 über die Verbindungen 5d und 5k in Verbindung. Die hohle Reckstange 6, die beim Betrieb der Maschine in die geschlossenen Form 2a und den zu blasenden Hohlkörper 7 gefahren wird, steht über die Hauptblasluftleitung 5a mit dem Spül- und Kühlluftmedienspeicher 33 in Verbindung.

Sind die Medienspeicher 31-36 alle gefüllt, so kann mit dem eigentlichen Herstellungsprozess der Hohlkörper 7 begonnen werden.

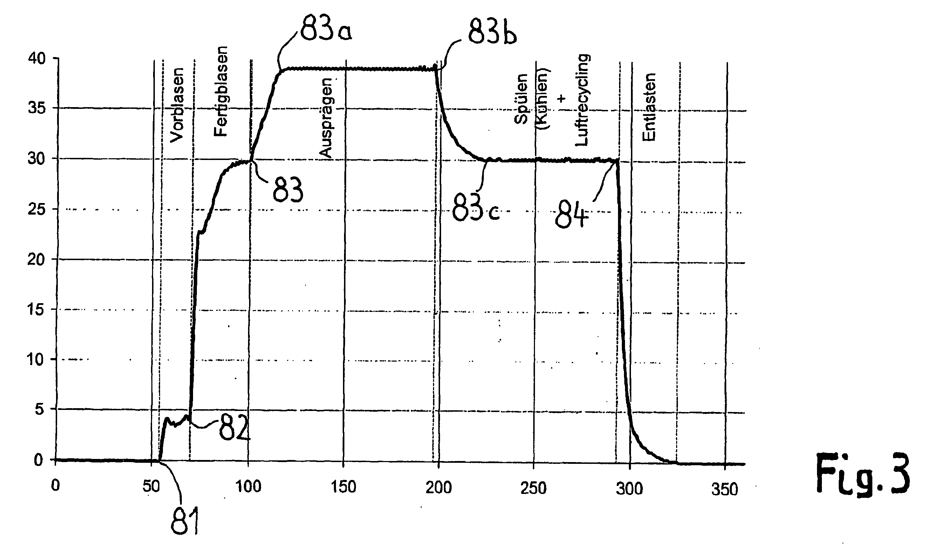

Zuerst wird der zu blasende Hohlkörper 7 in die Form 2a eingeführt, die dann geschlossen wird. Nachdem die Blasdüse 60 auf dem Hohlkörper 7 aufsitzt, kann die Hohle Reckstange 6 in diesen von oben eindringen, um diesen der Länge nach zu dehnen. Alsbald wird das Ventil 51 im Ventilblock 50 geöffnet (s. Fig. 3, Punkt 81), um unter einem Druck von ca. 5 bar stehende Vorblasluft über die Verbindung 5f und 5d in die Zuführung 61 der Blasdüse 60 und somit in den Hohlkörper 7 zu leiten. Dieser dehnt sich nun auch radial in Richtung der Blasformwand aus. Ist das Vorblasen beendet, so schließt das Ventil 51 wieder und das Fertigblasventil 52 wird geöffnet (s. Fig. 3, Punkt 82). Dadurch strömt die unter einem Druck von ca. 30 bar stehende Fertigblasluft vom Fertigblasmedienspeicher 31 über die Verbindung 5c, 5d und die Luftführung 61 der Blasdüse 60 in den Hohlkörper 7. Ist der Druck in dem nun fast fertigen Hohlkörper 7 aufgebaut, so ist die Fertigblasphase beendet, und das Fertigblasventil 52 wird wieder geschlossen. Zu diesem Prozesszeitpunkt hat der Hohlkörper zwar im Wesentlichen schon seine endgültige Außenform erreicht, die Konturen sind aber noch nicht vollständig ausgeprägt. Dazu dient die Ausprägphase, die mit dem Öffnen (s. Fig. 3, Punkt 83) des Spül- und Kühlluftventils 53 beginnt. Dadurch strömt die unter einem Druck von ca. 40 bar stehende, kalte Spülluft vom Spül- und Kühlluftmedienspeicher 33 über die Verbindung 5a und die hohle Reckstange 6 in den Hohlkörper 7. Nachdem sich der Druck im Hohlkörper 7 aufgebaut hat (s. Fig. 3, Punkt 83a), wird er noch einige Zeit auf diesem Niveau gehalten, um ihn vollständig auszuprägen. Durch den Temperaturunterschied der Spülluft zur Flascheninnenwand erwärmt sich die Spülluft etwas und die Flascheninnenwand wird kühler. Würde man den Hohlkörper 7 aber schon zu diesem Zeitpunkt aus der Blasform 2a nehmen, so wäre er aufgrund seiner noch enthaltenden Restwärme sehr instabil. Aus diesem Grund muss er weiter gekühlt werden. Dazu öffnet (s. Fig. 3, Punkt 83b) man das - bei noch immer offenem Spül- und Kühlluftventil 53 - das Fertigblasventil 52 erneut. Dadurch kann die sich im Hohlkörper 7 befindliche, etwas erwärmte Spülluft über die Luftführung 61 in der Blasdüse 60 und die Verbindung 5d und 5c zurück in den Fertigblasmedienspeicher 31 strömen. Auch dieser Zustand wird einige Zeit gehalten, um einerseits die notwendige Luftzirkulation im Hohlkörper 7 zu dessen Kühlung zu erzeugen und andererseits, um den Fertigblasmedienspeicher 31 mit Prozessluft zu versorgen, damit genügend Druckluft für den nächsten Blasschritt zur Verfügung steht. Bei diesem Prozessschritt stellt sich aufgrund des Druckausgleichs ein Druck von ca. 30 bar im Hohlkörper 7 ein (s. Fig. 3, Punkt 83c). Ist diese Kühl- und Spülphase, die gleichzeitig als Luftrecyclingphase dient, beendet, so werden das Fertigblasventil 52 und das Spül- und Kühlluftventil 53 geschlossen, während zeitgleich das Entlastungsventil 55 geöffnet (s. Fig. 3, Punkt 84) wird, sodass die sich im Hohlkörper 7 befindliche Prozessluft über die Luftführung 62 der Blasdüse 60, die Verbindung 5k und die Verbindung 51 in den Schalldämpfer 65 strömen kann (Entlastungsphase). Dadurch herrschen im Hohlkörper 7 nach dem Öffnen des Entlastungsventils 55 im Wesentlichen Umgebungsbedingungen.

Die Entlastung nach der Spül- und Kühl- bzw. Recyclingphase kann aber nicht nur gegen den Schalldämpfer 65 sondern auch gegen den Arbeitsluftmedienspeicher 37 durchgeführt werden. Dazu wird zeitgleich mit dem Schließen des Fertigblasventils 52 und Spül- und Kühlluftventils 53 das Arbeitsluftventil 54 geöffnet (s. Fig. 3, Punkt 84), sodass die unter einem Druck von ca. 30 bar stehende Luft im Hohlkörper 7 über die Luftführung 62 in der Blasdüse 60 und der Verbindung 5k und 5m in den Arbeitsluftmedienspeicher 37 strömen kann. Von dort aus ist es möglich, die Luft über die Verbindung 5n und den Drehverteiler 70 vom drehenden Teil der Maschine in einen stationären Teil einzuleiten, um damit andere, in der Umgebung der Maschine stattfindenden Prozesse mit Prozessluft zu versorgen. In der dargestellten Ausführungsform befindet sich der Arbeitsluftmedienspeicher 37 im drehenden Teil der Maschine. Es ist aber genauso möglich, diesen im stationären Teil oder sogar außerhalb der Maschine anzubringen. In diesem Fall würde die Luft in der Entlastungsphase über die Verbindung 5m bzw. 5n sofort in den Drehverteiler 70 der Maschine, und damit in den stationären Teil, geleitet.

Wird die Prozessluft, wie soeben beschrieben, nicht sofort über den Schalldämpfer 65 entlastet, sondern wird sie über den Arbeitsluftmedienspeicher 37 aus der Maschine geleitet, so geschieht dies nur bis zu dem Druckniveau, das im Arbeitsluftmedienspeicher 37 vorherrscht, statt. Die restliche sich im Hohlkörper 7 befindliche Luft wird nicht wiedergewonnen, sondern über die Luftführung 62 in der Blasdüse 60, die Verbindungen 5k und 51 und über den Schalldämpfer 65 ins Freie geleitet. Dazu wird, nachdem sich die Drücke im Hohlkörper 7 und im Arbeitsluftmedienspeicher 37 angepasst haben, das Arbeitsluftventil 54 geschlossen und das Entlastungsventil 55 geöffnet.
Um den Prozessluftdurchfluss zu erhöhen und damit auch die Leistungsfähigkeit der Maschine, können die Ventile im Ventilblock 50 verschieden ausgestaltet sein. Entweder es wird der maximal mögliche Luftdurchsatz durch ein Ventil erhöht, indem der Querschnitt vergrößert wird, oder es werden mehrere Ventile an einen Schaltpunkt gesetzt. So könnten zum Beispiel beim Entlasten anstatt des einen Entlastungsventils 55 zwei Entlastungsventile 55 und 55' verwendet werden.

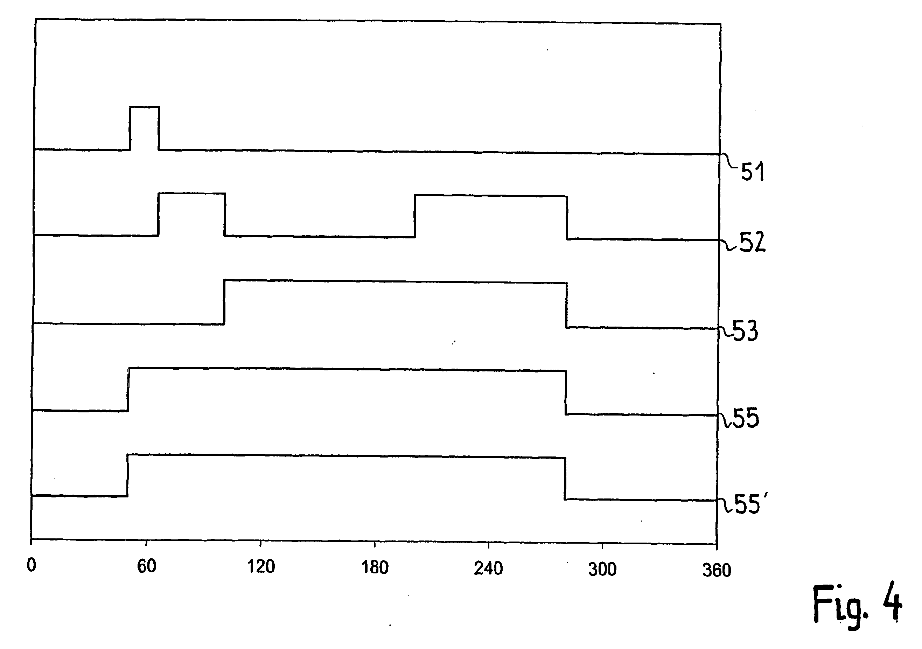

Fig. 3 und Fig. 4 stellen eine Prozesskurve, die den Blasdruck in bar bezüglich der Maschinenposition in Grad zeigt, und ein Schaltbild der Ventile 51-55' bezüglich der Maschinenposition in Grad, dar.

Zu Beginn des Prozesses (Maschinenposition 0°)sind das Vorblasventil 51, das Fertigblasventil 52 und das Spül- und Kühlluftventil 53 geschlossen, das Entlastungsventil 55 und 55' sind geöffnet. Nach einer gewissen Zeit t wird der Vorgang des Vorblasens durch Öffnen des Vorblasventils 51 gestartet (Maschinenposition 54°). Dadurch wird Vorblasluft mit ca. 5 bar vom Vorblasmedienspeicher 32 in den Hohlkörper 7 transferiert. Mehr oder minder zeitgleich werden auch die Entlastungsventile 55 und 55' geschlossen. Nachdem der Vorblasvorgang beendet ist, schließt sich das Vorblasventil 51 wieder und das Fertigblasventil 52 öffnet sich

(Maschinenposition 64°). Nach dem Schließen des Fertigblasventils 52 wird das Spül- und Kühlluftventil 53 geöffnet (Maschinenposition 100°).

Ist der Hohlkörper 7 fertig ausgeprägt, wird das Fertigblasventil 52 nochmals geöffnet (s. Fig. 3, Punkt 83b), wodurch nun Druckluft vom Spül- und Kühlluftmedienspeicher 33 über die Blasstation 2 in den Fertigblasmedienspeicher 31 strömen kann (Maschinenposition 197°). Zu diesem Zeitpunkt des Prozesses sind also das Fertigblasventil 52 und das Spül- und Kühlluftventil 53 geöffnet. Ist die fertiggeblasene Flasche ausreichend gekühlt, werden das Fertigblasventil 52 und das Spül- und Kühlluftventils 53 geschlossen sowie die Entlastungsventile 55 und 55' geöffnet (s. Fig. 3, Punkt 84), wodurch die sich in der Flasche befindliche und mit ca. 30 bar beaufschlagte Druckluft über die Entlastungsventile 55, 55' und den Schalldämpfer 65 in die Umgebung entweicht, damit im Hohlkörper 7 im Wesentlichen Umgebungsbedingungen herrschen (Maschinenposition 292°). Die restliche Prozesszeit (68° der Maschinendrehung) bis wieder ein neuer, noch zu blasender Hohlkörper 7 in die Blasform 2a eingeführt wird, wird zur Entlastung der fertiggeblasenen Flasche und zum Öffnen der Blasform 2a benötigt.

## Patentansprüche

1. Verfahren zum Herstellen eines Hohlkörpers (7), der aus einem erwärmten Vorformling aus thermoplastischem Kunststoff in einer konturierten Blasform (2a) ausgeformt wird, aufweisend zumindest die folgenden Schritte:
I. Vorblasen des Vorformlings durch Recken und Einleiten eines ersten Mediums in den Vorformling, das in einem ersten Medienspeicher (32) gespeichert und unter einem Druck p1 steht;
II. Fertigblasen des Vorformlings durch Einleiten eines zweiten Mediums in den Vorformling, das in einem zweiten Medienspeicher (31) gespeichert und dessen Druck p2 höher als p1 ist;
III. Kühlen des Hohlkörpers (7) von innen durch das Einlassen eines dritten Mediums, das in einem dritten Medienspeicher (33) gespeichert und dessen Druck p3 höher als p2 ist und durch die Druckdifferenz resultierendes vollständiges Ausprägen des Hohlkörpers (7);
IV. Herstellen einer Verbindung zwischen dem dritten Medienspeicher (33) und einem Medienspeicher mit geringerem Druck (31, 32, 34, 35, 36) über den Hohlkörper 7 und daraus resultierende Innenkühlung des Hohlkörpers (7);
V. Trennen dieser Verbindung und Ablassen des Mediums aus dem Hohlkörper (7), so dass im Hohlkörper (7) im Wesentlichen Umgebungsdruck vorherrscht.

2. Verfahren nach Anspruch 1, **dadurch gekennzeichnet, dass** es sich bei den Medien um Druckluft handelt.

3. Verfahren nach den Ansprüchen 1 oder 2, **dadurch gekennzeichnet, dass** mindestens ein Medienspeicher (31-36) mit mindestens einer Druckausgleichsvorrichtung (38) versehen ist, um den Druck im Medienspeicher (31-36) im Wesentlichen konstant zu halten.

4. Verfahren nach einem der vorhergehenden Ansprüche, **dadurch gekennzeichnet, dass** das Ablassen des Mediums aus dem Hohlkörper (7), so dass in diesem im Wesentlichen Umgebungsdruck herrscht, in einen vierten Medienspeicher (37) erfolgt.

5. Verfahren nach Anspruch 4, **dadurch gekennzeichnet, dass** der vierte Medienspeicher durch einen Niederdruckmedienspeicher (37) gebildet wird.

6. Verfahren nach einem der vorangegangenen Ansprüche, **dadurch gekennzeichnet, dass** der in Merkmal iv) genannte Medienspeicher (31, 32, 34, 35, 36) mit geringerem Druck durch den ersten oder zweiten Medienspeicher (32, 31) oder deren Kombination gebildet wird.

7. Verfahren nach einem der vorangegangenen Ansprüche, **dadurch gekennzeichnet, dass** der in Merkmal iv) genannte Medienspeicher (31, 32, 34, 35, 36) mit geringerem Druck durch den vierten (37) oder einen fünften Medienspeicher oder deren Kombination gebildet wird.

8. Verfahren nach einem der vorangegangenen Ansprüche, **dadurch gekennzeichnet, dass** das Einlassen des Kühlmediums nach Merkmal iii) durch eine hohle Reckstange (6) durchgeführt wird.

9. Vorrichtung zum Herstellen eines Hohlkörpers (7), der aus einem erwärmten Vorformling aus thermoplastischem Kunststoff in einer konturierten Blasform (2a) durch Einleiten eines ersten Mediums in den Vorformling (7), mehr oder minder zeitgleiches Recken des Vorformlings durch eine Reckstange (6) und Einleiten eines zweiten Mediums in den Vorformling ausformbar ist und der durch ein drittes Medium kühlbar ist, **dadurch gekennzeichnet, dass** die Vorrichtung mindestens drei Medienspeicher (31, 32, 33) aufweist und im ersten Medienspeicher (32) ein unter einem Druck p1 stehendes Vorblasmedium, im zweiten Medienspeicher (31) ein unter einem Druck p2, der höher ist als p1, stehendes Fertigblasmedium, sowie im dritten Medienspeicher (33) ein unter einem Druck p3, der höher ist als p2, stehendes Kühlmedium speicherbar ist, wobei das Vorblasmedium unter einem Druck von 2-20 bar, das Fertigblasmedium unter einem Druck von 15-45 bar und das Kühlmedium unter einem Druck von 30-45 bar steht und wobei die Medienspeicher (31, 32, 33) so angeordnet sind, dass eine Verbindung vom dritten Medienspeicher (33) zu einem Medienspeicher (31, 32) mit geringerem Druck zum Spülen des Mediums vom dritten Medienspeicher über den Hohlkörper in den ersten und/oder zweiten Medienspeichers herstellbar ist.

10. Vorrichtung nach Anspruch 9, **dadurch gekennzeichnet, dass** es sich bei der Vorrichtung um eine Rotationsstreckblasmaschine (1) handelt.

11. Vorrichtung nach den Ansprüchen 9 oder 10, **dadurch gekennzeichnet, dass** es sich bei mindestens einem Medium um Druckluft handelt.

12. Vorrichtung nach einem der vorangegangenen Ansprüche 9-11, **dadurch gekennzeichnet, dass** eine zentrale Luftzuführung zur Maschine existiert.

13. Vorrichtung nach Anspruch 12, **dadurch gekennzeichnet, dass** die zentrale Luftzuführung mit 40 bar beaufschlagt ist.

14. Vorrichtung nach einem der vorangegangenen Ansprüche 9-13, **dadurch gekennzeichnet, dass** es sich bei den Medienspeichern (31-37) um Ringkanäle handelt.

15. Vorrichtung nach Anspruch 14, **dadurch gekennzeichnet, dass** die Ringkanäle (31-37) aus zwei jeweils abgeschlossenen Halbkreiskanälen bestehen.

16. Vorrichtung nach einem der vorangegangenen Ansprüche 9-15, **dadurch gekennzeichnet, dass** mindestens ein Medienspeicher (31-37) mit mindestens einer Druckausgleichsvorrichtung (38) versehen ist, um den Druck im Medienspeicher (31-37) nahezu konstant zu halten.

17. Vorrichtung nach einem der vorangegangenen Ansprüche 9-16, **dadurch gekennzeichnet, dass** die Kühlluft durch eine hohle Reckstange (6) in den Hohlkörper (7) eingeführt wird.

18. Vorrichtung nach Anspruch 17, **dadurch gekennzeichnet, dass** die Reckstange (6) sowohl unten, als auch seitlich Löcher aufweist, durch die das durchgeführte Prozessmedium austreten kann.

19. Vorrichtung nach einem der vorangegangenen Ansprüche 9-18, **dadurch gekennzeichnet, dass** auf dem zu formenden Hohlkörper (7) eine Blasdüse (60) aufsitzt, die mindestens eine Verbindung (61, 62) zu einem über ihr befindlichen Ventilblock (50) aufweist.

20. Vorrichtung nach Anspruch 19, **dadurch gekennzeichnet, dass** der Ventilblock (50) mindestens ein Ventil (51-55) aufweist, das den Medienfluss vom und zum Hohlkörper (7) steuert.

21. Vorrichtung nach einem der vorangegangenen Ansprüche 9-20, **dadurch gekennzeichnet, dass** sechs Medienspeicher (31-37) vorhanden sind, nämlich zur Speicherung des Vorblas-(32), des Fertigblas- (31), des Kühl- (33) und des Steuermediums (34) sowie des Mediums zur Steuerung der Bewegungen der Reckstange (35-36) (auf und ab).

## Claims

1. Method for producing a hollow body (7) which is formed from a heated preform made of thermoplastic plastic material in a contoured blow mould (2a), comprising at least the following steps:
I. pre-blowing of the preform by stretching and introducing into the preform a first medium which is stored in a first media storage (32) and which is under a pressure p1;
II. finish-blowing of the preform by introducing into the preform a second medium which is stored in a second media storage (31) and whose pressure p2 is higher than p1;
III. cooling the hollow body (7) from the inside by introducing a third medium which is stored in a third media storage (33) and whose pressure p3 is higher than p2 and by complete stamping of the hollow body (7) resulting from the pressure difference;
IV. producing a connection between the third media storage (33) and a media storage having lower pressure (31, 32, 34, 35, 36) via the hollow body (7) and resultant inner cooling of the hollow body (7);
V. separating this connection and discharging the medium from the hollow body (7) so that ambient pressure substantially prevails in the hollow body (7).

2. Method according to claim 1, **characterised in that** the media are compressed air.

3. Method according to claim 1 or claim 2, **characterised in that** at least one media storage (31-36) is provided with at least one pressure equalisation device (38) in order to keep the pressure in the media storage (31-36) substantially constant.

4. Method according to any one of the preceding claims, **characterised in that** the discharge of the medium from the hollow body (7) so that ambient pressure substantially prevails therein is carried out in a fourth media storage (37).

5. Method according to claim 4, **characterised in that** the fourth media storage is formed by a low-pressure media storage (37).

6. Method according to any one of the preceding claims, **characterised in that** the media storage (31, 32, 34, 35, 36) which is mentioned in feature iv) and which has lower pressure is formed by the first or second media storage (32, 31) or the combination thereof.

7. Method according to any one of the preceding claims, **characterised in that** the media storage (31, 32, 34, 35, 36) which is mentioned in feature iv) and which has lower pressure is formed by the fourth media storage (37) or a fifth media storage or the combination thereof.

8. Method according to any one of the preceding claims, **characterised in that** the introduction of the cooling medium according to the feature iii) is carried out by a hollow stretching rod (6).

9. Device for producing a hollow body (7) which can be formed from a heated preform made of thermoplastic plastic material in a contoured blow mould (2a) by a first medium being introduced into the preform (7), more or less simultaneous stretching of the preform by a stretching rod (6) and introduction of a second medium into the preform, and which can be cooled by a third medium, **characterised in that** the device has at least three media storages (31, 32, 33) and a pre-blowing medium under a pressure p1 can be stored in the first media storage (32), a finish-blowing medium under a pressure p2 which is higher than p1 can be stored in the second media storage (31), and a cooling medium which is under a pressure p3 which is higher than p2 can be stored in the third media storage (33), the pre-blowing medium being under a pressure of from 2 to 20 bar, the finish-blowing medium being under a pressure of from 15 to 45 bar and the cooling medium being under a pressure of from 30 to 45 bar, and the media storages (31, 32, 33) being arranged in such a manner that a connection from the third media storage (33) to a media storage (31, 32) having a lower pressure can be produced in order to flush the medium from the third media storage via the hollow body into the first and/or second media storage.

10. Device according to claim 9, **characterised in that** the device is a rotary stretch blowing machine (1).

11. Device according to claim 9 or claim 10, **characterised in that** at least one medium is compressed air.

12. Device according to any one of the preceding claims 9 to 11, **characterised in that** there is provided a central air supply to the machine.

13. Device according to claim 12, **characterised in that** the central air supply is acted on at 40 bar.

14. Device according to any one of the preceding claims 9 to 13, **characterised in that** the media storages (31-37) are annular channels.

15. Device according to claim 14, **characterised in that** the annular channels (31-37) consist of two respectively closed semicircular channels.

16. Device according to any one of the preceding claims 9 to 15, **characterised in that** at least one media storage (31-37) is provided with at least one pressure equalisation device (38) in order to keep the pressure in the media storage (31-37) substantially constant.

17. Device according to any one of the preceding claims 9 to 16, **characterised in that** the cooling air is introduced into the hollow body (7) through a hollow stretching rod (6).

18. Device according to claim 17, **characterised in that** the stretching rod (6) has both at the lower side and at the sides holes through which the conveyed process medium can be discharged.

19. Device according to any one of the preceding claims 9 to 18, **characterised in that** a blast nozzle (60) which has at least one connection (61, 62) to a valve unit (50) located thereabove is located on the hollow body (7) to be formed.

20. Device according to claim 19, **characterised in that** the valve unit (50) has at least one valve (51-55) which controls the medium flow from and to the hollow body (7).

21. Device according to any one of the preceding claims 9 to 20, **characterised in that** there are provided six media storages (31-37), that is to say, for storing the pre-blowing medium (32), the finish-blowing medium (31), the cooling medium (33) and the control medium (34) and the medium for controlling the movements of the stretching rod (35-36) (up and down).

## Revendications

1. Procédé de fabrication d'un corps creux (7) formé à partir d'une préforme chauffée en matière synthétique thermoplastique dans un moule de soufflage à contour (2a), comprenant au moins les étapes suivantes :
I. présoufflage de la préforme par étirage et introduction d'un premier fluide dans la préforme, qui est stocké dans un premier réservoir de fluide (32) et soumis à une pression p1 ;
II. soufflage de finition de la préforme par injection d'un deuxième fluide dans la préforme, qui est stocké dans un deuxième réservoir de fluide (31) et dont la pression p2 est supérieure à la pression p1 ;
III. refroidissement du corps creux (7) depuis l'intérieur en laissant entrer un troisième fluide, qui est stocké dans un troisième réservoir de fluide (33) et dont la pression p3 est supérieure à la pression p2, et estampage complet du corps creux (7) résultant de la différence de pression ;
IV. réalisation d'une connexion entre le troisième réservoir de fluide (33) et un réservoir de fluide à pression plus faible (31, 32, 34, 35, 36) sur le corps creux (7), et refroidissement interne résultant du corps creux (7) ;
V. coupure de cette connexion et soufflage du fluide à travers le corps creux (7), de telle sorte qu'une pression essentiellement égale à la pression ambiante règne dans le corps creux (7) .

2. Procédé selon la revendication 1, **caractérisé en ce que** les fluides sont de l'air comprimé.

3. Procédé selon la revendication 1 ou 2, **caractérisé en ce qu**'au moins un réservoir de fluide (31-36) est pourvu d'au moins un dispositif d'équilibrage de pression (38) pour maintenir une pression essentiellement constante dans le réservoir de fluide (31-36).

4. Procédé selon l'une des revendications précédentes, **caractérisé en ce que** le soufflage du fluide hors du corps creux (7) se produit dans un quatrième réservoir de fluide (37), de telle sorte qu'une pression essentiellement égale à la pression ambiante règne dans le corps creux.

5. Procédé selon la revendication 4, **caractérisé en ce que** le quatrième réservoir de fluide est constitué sous forme d'un réservoir de fluide à basse pression (37) .

6. Procédé selon l'une des revendications précédentes, **caractérisé en ce que** le réservoir de fluide (31, 32, 34, 35, 36) mentionné dans la caractéristique iv) à plus faible pression est formé par le premier ou le deuxième réservoir de fluide (32, 31), ou une combinaison de ceux-ci.

7. Procédé selon l'une des revendications précédentes, **caractérisé en ce que** le réservoir de fluide (31, 32, 34, 35, 36) mentionné dans la caractéristique iv) à plus faible pression est formé par le quatrième (37) ou un cinquième réservoir de fluide, ou une combinaison de ceux-ci.

8. Procédé selon l'une des revendications précédentes, **caractérisé en ce que** le fluide de refroidissement selon la caractéristique iii) est introduit à travers une barre d'étirage creuse (6).

9. Dispositif de fabrication d'un corps creux (7) qui peut être formé à partir d'une préforme chauffée en matière synthétique thermoplastique dans un moule de soufflage à contour (2a) par l'introduction d'un premier fluide dans la préforme (7), l'étirage plus ou moins simultané de la préforme à l'aide d'une barre d'étirage (6) et l'introduction d'un deuxième fluide dans la préforme, et qui peut être refroidi par un troisième fluide, **caractérisé en ce que** le dispositif comporte au moins trois réservoirs de fluide (31, 32, 33) et **en ce qu'**un fluide de présoufflage sous une pression p1 peut être stocké dans le premier réservoir de fluide (32), un fluide de soufflage de finition sous une pression p2 supérieure à p1 peut être stocké dans le deuxième réservoir de fluide (31), et un fluide de refroidissement sous une pression p3 supérieure à p2 peut être stocké dans le troisième réservoir de fluide (33), dans lequel le fluide de présoufflage est soumis à une pression de 2 à 20 bars, le fluide de soufflage de finition à une pression de 15 à 45 bars, et le fluide de refroidissement à une pression de 30 à 45 bars, et dans lequel le réservoir de fluide (31, 32, 33) est agencé de telle sorte qu'une connexion du troisième réservoir de fluide (33) à un réservoir de fluide (31, 32) avec une pression plus faible peut être réalisée pour rincer le fluide du troisième réservoir de fluide sur le corps creux dans le premier et/ou le deuxième réservoir de fluide.

10. Dispositif selon la revendication 9, **caractérisé en ce que** le dispositif est une machine d'étirage-soufflage rotative (1).

11. Dispositif selon la revendication 9 ou 10, **caractérisé en ce qu'**au moins un fluide est de l'air comprimé.

12. Dispositif selon l'une des revendications précédentes 9 à 11, **caractérisé en ce qu**'il existe une alimentation d'air centrale de la machine.

13. Dispositif selon la revendication 12, **caractérisé en ce que** l'alimentation d'air centrale est soumise à une pression de 40 bars.

14. Dispositif selon l'une des revendications précédentes 9 à 13, **caractérisé en ce que** les réservoirs de fluide (31-37) sont des canaux annulaires.

15. Dispositif selon la revendication 14, **caractérisé en ce que** les canaux annulaires (31-37) sont constitués de deux canaux semi-circulaires chaque fois fermés.

16. Dispositif selon l'une des revendications précédentes 9 à 15, **caractérisé en ce qu'**au moins un réservoir de fluide (31-37) est pourvu d'au moins un dispositif d'équilibrage de pression (38) pour maintenir la pression dans le réservoir de fluide (31-37) essentiellement constante.

17. Dispositif selon l'une des revendications précédentes 9 à 16, **caractérisé en ce que** l'air de refroidissement est introduit à travers une barre d'étirage creuse (6) dans le corps creux (7).

18. Dispositif selon la revendication 17, **caractérisé en ce que** la barre d'étirage (6) comporte des trous aussi bien inférieurs que latéraux, à travers lesquels peut sortir le fluide de procédé introduit.

19. Dispositif selon l'une des revendications précédentes 9 à 18, **caractérisé en ce qu'**une buse de soufflage (60) est montée sur le corps creux (7) à former, qui comporte au moins une connexion (61, 62) avec un bloc de vannes (50) qui s'y trouve.

20. Dispositif selon la revendication 19, **caractérisé en ce que** le bloc de vannes (50) comporte au moins une vanne (51-55) qui commande l'écoulement de fluide entrant et sortant du corps creux (7).

21. Dispositif selon l'une des revendications précédentes 9 à 20, **caractérisé en ce que** six réservoirs de fluide (31-37) sont présents, en l'occurrence pour le stockage des fluides de présoufflage (32), de soufflage de finition (31), de refroidissement (33) et de commande (34), ainsi que du fluide pour la commande des déplacements de la barre d'étirage (35-36) (entrants et sortants).
